# EUROPÄISCHE PATENTSCHRIFT

(11) **EP 3 637 216 B1**
(45) Veröffentlichungstag und Bekanntmachung des Hinweises auf die Patenterteilung: **25.01.2023**
(21) Anmeldenummer: 19194831.4
(22) Anmeldetag: 02.09.2019
(51) Int. Cl.: G05D 16/20, E03B 7/07

(54) **ANORDNUNG UND VERFAHREN ZUR REGELUNG DES AUSGANGS-FLIESSDRUCKS EINER WASSERARMATUR**
ARRANGEMENT AND METHOD FOR REGULATING THE OUTPUT FLOW PRESSURE OF A WATER FITTING
DISPOSITIF ET PROCÉDÉ DE RÉGULATION DE LA PRESSION DE FLUX DE SORTIE D'UNE ROBINETTERIE D'EAU

(30) Priorität: 10.10.2018 DE 102018124981
(43) Veröffentlichungstag der Anmeldung: 15.04.2020
(73) Patentinhaber: Hans Sasserath GmbH & Co KG, 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- EP-A1- 2 098 646
- EP-A1- 3 266 944
- CN-A- 106 885 028
- DE-A1-102012 107 594
- US-A1- 2011 178 644
- US-A1- 2014 230 925

## Beschreibung

### Technisches Gebiet

Die Erfindung betrifft eine Wasserarmaturen-Anordnung enthaltend
(a) ein wasserführendes Armaturengehäuse mit einem von Eingangsdruck beaufschlagten Einlass und mit einem von einem Ausgangsdruck beaufschlagten Auslass;
(b) einen zwischen Einlass und Auslass angeordneten Druckminderer mit einem Stellglied zum Einstellen des Ausgangsdrucks;
(c) einen Druckminderer-Motor zum Bewegen des Stellglieds;
(d) einen Drucksensor zur Erfassung des Ausgangsdrucks; und
(e) eine Steuereinrichtung zur Steuerung des Druckminderer-Motors nach Maßgabe des mit dem Drucksensor erfassten Ausgangsdrucks.

Die Erfindung betrifft ferner ein Verfahren zur Regelung des Ausgangs-Fließdrucks mit einem Druckminderer in einer Wasserarmatur stromaufwärts einer Wasserinstallation.

Druckminderer sind Ventile zur Regelung des Ausgangsdrucks. Dadurch wird ein gleichmäßiger Ausgangsdruck gewährleistet, auch wenn die Wasserversorgung Druckschwankungen unterliegt. Mit einem Druckminderer werden Druckspitzen verhindert, die Schäden in der Wasserinstallation verursachen können. Eine weitere Anwendung von Druckminderern ist es, den Druck auf einen etwas geringeren Wert zu regeln um den Wasserverbrauch zu reduzieren.

Typischerweise besteht ein Druckminderer aus einem federbeaufschlagten Ventil. Die Federkraft wird so eingestellt, dass der gewünschte Ausgangsdruck erreicht wird. Es gibt aber auch andere Druckminderer, beispielsweise Kolbendruckminderer. Der Ausgangsdruck ist in herkömmlichen Trinkwasserinstallationen in Gebäuden beispielsweise 4 bar. Durch Verstellen eines Stellglieds am Druckminderer, beispielsweise des Federwiderlagers kann die Federkraft manuell verändert werden. Dadurch kann der Druckminderer auf einen anderen Druck eingestellt werden. Der eingestellte Druck ist der Ruhedruck, wenn kein Wasser fließt. Dann ist der durch die Druckminderer-Armatur fließende Volumenstrom Null.

Wenn in der Wasserinstallation gleichzeitig viel Wasser gezapft wird, ist der Volumenstrom hoch. Dann fällt der Druck ab. Entsprechend dem dadurch verursachten Druckabfall ist der Fließdruck bei geöffnetem Druckminderer geringer als der voreingestellte Ruhedruck. Der Druckminderer selber bildet einen zusätzlichen Strömungswiderstand. Der Strömungswiederstand des Druckminderers wirkt sich auf den Fließdruck, nicht aber auf den Ruhedruck im Auslass aus. Typische Druckminderer bewirken bei hohen Volumenströmen einen zusätzlichen Druckabfall des Fließdrucks im Bereich von 0,8 bis 1 bar. Der am Druckminderer voreingestellte Druck wird dann nicht erreicht.

### Stand der Technik

Unter der Bezeichnung "Drufi" vertreibt die Anmelderin Druckminderer-Filterkombinationen, bei denen eine Druckminderer-Anordnung im Innenraum eines Filters angeordnet ist. Der Druckminderer ist von außen nicht zugänglich und wird werksseitig fest eingestellt.

EP 1 764 667 B1 offenbart eine Armatur zur Druckreduktion in einer Fluidleitung. Die Armatur weist einen Drucksensor zum Erfassen des auslassseitigen Fluiddrucks und eine eigene Steuerung zum Steuern eines Antriebs auf. Mit dem Antrieb kann der Druckminderer eingestellt werden. Weitere Funktionalitäten sind an der Armatur nicht vorgesehen.

WO 2014/029699 A1 und US 2011/0178644 A1 offenbaren eine Leckageschutzarmatur für Wasserinstallationen. Die Armaturen haben strömungsmessende Mittel, etwa eine Turbine, und eine motorbetriebene Absperrung. Außerdem ist eine Steuerung vorgesehen. Wenn untypische Strömungszustände, beispielsweise bei einem Rohrbruch, gemessen werden, wird die Absperrung von der Steuerung geschlossen. Leckageschutzarmaturen dienen zur Vermeidung von Wasserschäden und Wasserverschwendung.

CN 106 885 028 A offenbart ein elektrisch betätigbares Ventil, welches mit Energie aus dem Wasserstrom durch das Ventil betätigt wird.

### Offenbarung der Erfindung

Es ist Aufgabe der Erfindung, die Kontrolle der hydraulischen Verhältnisse in einer Wasserinstallation zu vereinfachen und zu verbessern.

Erfindungsgemäß wird die Aufgabe mit einer Wasserarmatur der eingangs genannten Art gelöst, die dadurch gekennzeichnet ist, dass
(f) die Wasserarmaturen-Anordnung strömungserfassende Mitteln umfasst; und
(g) die Steuereinrichtung mit den Signalen der strömungserfassenden Mittel beaufschlagt ist.

Die erfindungsgemäße Anordnung sieht vor, dass ein Druckminderer, ein Drucksensor und strömungsmessende Mittel eine gemeinsame, integrierte Wasserarmatur mit einer gemeinsamen Steuerung bilden. Die Erfindung ermöglicht den Zugriff der Steuerung auf die Sensorsignale beider Funktionalitäten, d.h. auf den Drucksensor im Auslass und die strömungserfassenden Mittel. Dies ermöglicht eine bessere Kontrolle der hydraulischen Verhältnisse in der dahinterliegenden Trinkwasserinstallation. Es können auch solche Eigenschaften der Wasserinstallation erfasst und geregelt werden, die nur mit einem Drucksensor und strömungserfassenden Mitteln gleichzeitig zu erfassen sind. Die Sensordaten können in der Steuerung oder remote ausgewertet werden.

Der Druckminderer kann als Absperrung eingesetzt werden. Bei einer besonders vorteilhaften Ausgestaltung der Erfindung ist aber vorgesehen, dass eine von einem Absperrmotor betriebenen Absperrung enthalten ist, die zusammen mit den strömungserfassenden Mitteln und der Steuerung eine Leckagesschutzeinrichtung bilden und die Steuerung sowohl den Druckminderer-Motor als auch den Absperrmotor steuert. Anders als bei bekannten Wasserinstallationen, bei denen eine Druckminderer-Anordnung und eine Leckageschutzanordnung separate Komponenten bilden, die einzeln montiert werden, kann die Armatur als Ganzes montiert werden. Das spart Installationsaufwand. Für den Druckminderer und die Leckageschutzanordnung wird eine gemeinsame Steuerung verwendet. Dadurch wird die Anordnung kostengünstiger bei der Herstellung und bei der Installation. Es muss nur eine Steuerung mit nur einer Benutzerschnittstelle installiert und konfiguriert werden. Mit dem Druckminderer und der Absperrung stehen in einer Anordnung zwei unterschiedliche Komponenten zur Beeinflussung der hydraulischen Verhältnisse der Trinkwasserinstallation zur Verfügung.

Die strömungserfassenden Mittel können eine Turbine umfassen. Es ist aber auch möglich, andere strömungserfassende Mittel zu verwenden. Die Turbine kann insbesondere mit einem Magneten versehen sein, der mit einem gehäusefesten Reed-Kontakt zusammenwirkt. Der Reedkontakt liefert ein Signal an eine Steuerung, welches die Anzahl der Drehungen der Turbine in einem Zeitraum repräsentiert.

Die erfindungsgemäße Anordnung wird vorteilhafterweise im Eingangsbereich einer Wasserinstallation, insbesondere im Hauseingang eines Gebäudes installiert. Dort befindet sich üblicherweise auch ein Filter, welcher Verunreinigungen von der Wasserversorgung und dem Rohrleitungssystem aus dem Wasser herausfiltert. Eine besonders vorteilhafte Ausgestaltung der Erfindung sieht vor, dass ein Filter stromaufwärts zu der Turbine angeordnet ist. Damit wird eine Multikomponenten-Wasserarmatur geschaffen, die als Ganzes installiert werden kann. Entsprechend wird der Installationsaufwand reduziert. Wenn der Filter stromaufwärts zu der Turbine vorgesehen ist, hat dies den weiteren Vorteil, dass die Turbine vor Verunreinigungen geschützt ist.

Besonders vorteilhaft ist es, wenn der Filter ein Rückspülfilter ist. Diese lassen sich leicht reinigen. Die Rückspülung kann insbesondere durch einen Motor ausgelöst werden, der von der gleichen Steuerung gesteuert wird, wie die übrigen Komponenten der Anordnung. Es kann aber auch eine Rückspülung manuell ausgelöst werden.

Die Turbine kann vor der Absperrung angeordnet sein. Vorteilhafterweise ist aber vorgesehen, dass die Turbine und der stromaufwärts zur Turbine angeordnete Filter in der Strömung zwischen der Absperrung und dem Druckminderer angeordnet sind. Das erleichtert die Wartung und den Zugang zu der Turbine und dem Filter. Eine zusätzliche Absperrung ist dann nicht erforderlich.

Bei einer weiteren Ausgestaltung umfasst die Wasserarmatur einen zusätzlichen Drucksensor zwischen Absperrung und Druckminderer, dessen Messwerte an die Steuerung übertragen werden. Mit diesem Drucksensor kann der Eingangsdruck erfasst werden. Die Messung des Eingangs- und des Ausgangsdrucks ermöglicht die Prüfung der Bauteile in der Armatur hinsichtlich ihrer Einflüsse auf den Druck.

Für die Steuerung und Regelung werden in üblicher Weise Steuer- und Auswerteeinrichtungen mit Prozessoren, Elektronikkomponenten, Schnittstellen zu den Sensoren, eine Energieversorgung und optional Bedien-, Anzeige- und Übertragungselemente verwendet. Diese sind ganz oder aber nur teilweise in der Steuerung vorgesehen. Insbesondere kann vorgesehen sein, dass die Steuerung eine oder mehrere Schnittstellen aufweist, über welche Einstellungen für Leckageschutz und/oder Druckverhältnisse vorgenommen werden können. Solche Einstellungen umfassen insbesondere den Ruhedruck hinter dem Druckminderer und die Leckageschutzeinstellungen. Es können aber auch andere Einstellungen vorgenommen werden, beispielsweise die Vergabe von Zugangsrechten, Energiespareinstellungen, Sicherheitseinstellungen und dergleichen.

Die einzelnen Funktionalitäten der Steuerung können in einem Bauteil vereint sein. Es kann aber auch vorgesehen sein, dass Funktionalitäten der Steuerung, insbesondere die Ein- und Ausgabe und die Rechnerleistung zusätzlich oder stattdessen remote vorgesehen sind. Dann sind diese Funktionalitäten möglich, aber nicht zwingend in der Steuerung vor Ort angeordnet. Die Steuerung kann entsprechend kostengünstig ausgeführt werden. Die vergleichsweise teuren Funktionalitäten können von anderen Geräten, etwa einem Smartphone oder einem Personal Computer, verwirklicht werden, wo sie ohnehin vorhanden sind.

Bei einer bevorzugten Ausgestaltung der Erfindung ist daher vorgesehen, dass die Schnittstelle eine Drahtlos-Schnittstelle umfasst und die Einstellungen über einen Teilnehmer in einem Netzwerk vorgenommen werden können, das drahtlos mit der Steuerung verbunden ist. Der Druckminderer kann über die Schnittstelle in ein Netzwerk eingebunden sein. Typische Netzwerke sind Telefonnetzwerke, WLAN oder das Internet. Es können aber auch einfache Infrarot- oder Bluetooth-Schnittstellen vorgesehen sein, welche den Zugang von einem mobilen Endgerät erlauben. Es versteht sich, dass die Steuerung auch über ein Kabel mit einem Netzwerk, beispielsweise dem Internet verbunden sein kann.

Die Verbindung über ein Netzwerk hat den Vorteil, dass die Anzeige- und Bedienelemente, etwa Tastatur und Anzeige nicht an der Steuerung selber vorgesehen sein müssen. Diese kann vergleichsweise einfach ausgebildet sein. Auch muss die Bedienung nicht in Gebäudeteilen, etwa im Keller oder einem Technikraum mit möglicherweise unbequemen Zugang, schlechter Beheizung und Beleuchtung, vorgenommen werden, sondern kann bequem an jedem beliebigen Arbeitsplatz erfolgen. Auch erfordert die Einstellung des Druckminderers über ein Netzwerk keine Präsenz des Installateurs. Das verhindert Terminvereinbarungen, Anfahrtswege und Kosten.

Bei einer weiteren Ausgestaltung der Erfindung sind die Steuerung, die Absperrung, der Absperrmotor, der Druckminderer und der Druckminderermotor, sowie die zugehörigen Teile des wasserführenden Armaturengehäuses mit einer gemeinsamen Abdeckung abgedeckt. Da der Druckminderer motorbetrieben und von außen steuerbar ist, ist keine Einstellung von Hand erforderlich. Der Druckminderer kann daher zusammen mit den anderen Komponenten unter einer Schutzabdeckung angeordnet sein, die ihn vor unbefugtem Zugriff und Umwelteinflüssen schützt.

Bei der Erfindung kann die Regelung des Ausgangs-Fließdrucks mit einem Druckminderer in einer Wasserarmatur stromaufwärts einer Wasserinstallation nach einem Verfahren erfolgen mit den Schritten:
(a) Einstellen des Druckminderers auf einen Sollwert für den Ruhedruck;
(b) Messen des Ausgangs-Fließdrucks mit einem Drucksensor;
(c) Messen des Volumenstroms durch die Wasserarmatur mit strömungserfassenden Mitteln;
(d) Übertragen der Messwerte für den Druck und den Volumenstrom an eine Steuerung;
(e) Nachregeln der Einstellung des Druckminderers nach Maßgabe der von dem Drucksensor und den strömungserfassenden Mitteln gemessenen Messwerte;
(f) Zurückstellen der Einstellung des Druckminderers, wenn kein Volumenstrom mehr mit den strömungserfassenden Mitteln gemessen wird.

Die Verwendung einer gemeinsamen Steuerung ermöglicht so die gegenseitige Nutzung der Sensorsignale. Das Verfahren nutzt die Signale der für den Leckageschutz erforderlichen strömungserfassenden Mittel zur Einstellung des Druckminderers.

Insbesondere kann vorgesehen sein, dass
(a) das Nachregeln mittels eines Druckminderer-Motors erfolgt, welcher ein Stellglied des Druckminderers bewegt;
(b) die Motorstellung vor einem Nachregel-Vorgang gespeichert wird; und
(c) zum Zurückstellen der Motor zurück in die gespeicherte Ausgangsstellung bewegt wird.

Bei dieser Ausgestaltung der Erfindung wird nur die Motorstellung gespeichert und der Motor wieder den gleichen Stellweg zurückgefahren. Eine Messung und Auswertung der Messung ist nicht erforderlich. Dadurch wird das Verfahren schneller und weniger störanfällig.

Wenn ein Schrittmotor für die Einstellung des Druckminderers verwendet wird, werden nur die gefahrenen Schritte gespeichert. Es versteht sich, dass auch jeder andere Motor geeignet ist.

Bei einer besonders vorteilhaften Ausgestaltung der Erfindung ist vorgesehen, dass die Amplitude der Nachregelung in Abhängigkeit vom gemessenen Volumenstrom gewählt wird. Die Amplitude der Nachregelung ist beispielsweise der Stellweg der Feder eines federbeaufschlagten Ventils. Mit dem Stellweg wird die Federkraft und damit der Ausgangsdruck des Druckminderers eingestellt und nachgeregelt.

Die Auswahl der Amplitude hat den Vorteil, dass der Stellweg des Stellglieds kleiner gewählt werden kann, wenn nur geringe Volumenströme fließen. Dann kann der Druckminderer schneller in seine Ausgangsstellung zurückbewegt werden, wenn die Wasserentnahme beendet ist. Dadurch werden Druckstöße vermieden, die auftreten könnten, wenn der Druckminderer nicht wieder in seine Ausgangslage zurückbewegt wurde, bevor sich der volle Ruhedruck aufgebaut hat.

Insbesondere kann vorgesehen sein, dass der Druckminderer bei geringem Volumenstrom weniger geöffnet wird, als bei hohem Volumenstrom.

Ein besonders vorteilhaftes Verfahren ergibt sich, wenn
(a) der Druck an wenigstens einer weiteren Stelle einer Wasserinstallation gemessen wird und über ein Netzwerk an eine gemeinsame Steuerung kommuniziert wird; und
(b) der Druck an der wenigstens einen weiteren Stelle beim Nachregeln des Druckminderers berücksichtigt wird.

In mehrstöckigen Gebäuden hängt der Druck wesentlich auch von der Installationshöhe der Zapfstelle ab. In den oberen Stockwerken ist der Druck geringer als in unteren Stockwerken. Der Ruhedruck wird gewöhnlich auf einen Wert eingestellt, der geringer ist, als der Versorgungsdruck. Wenn nun der Fließdruck erheblich abfällt, kann der Druckminderer nachgeregelt, d.h. weiter geöffnet werden, so dass einerseits der Druck in den unteren Stockwerken den nach den Vorschriften und Normen maximal zulässigen Druck von beispielsweise 4,8 bar nicht überschreitet, aber umgekehrt in den oberen Stockwerken ein höherer Fließdruck erreicht wird.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen insbesondere DIN EN 806-1 und DIN EN 1717 und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Deutscher Verein des Gas- und Wasserfaches e.V. oder Verein Deutscher Ingenieure, dargelegt sind. Insbesondere haben die verwendeten Begriffe nicht die gegenteilige Bedeutung dessen, was der Fachmann den obigen Publikationen entnimmt.

Weiterhin werden hier folgende Bedeutungen für die verwendeten Begriffe zugrunde gelegt:

| | |
|---|---|
| Absperrung: | ist jede Art von Einrichtung, welche einen Fluidstrom ganz oder teilweise blockiert. Typische Absperrungen sind Kugelhähne oder Ventile. |
| Armatur: | ist ein Bauteil zur Installation in oder an einer Rohrleitung oder anderen Fluidinstallation zum Absperren, Regeln oder Beeinflussen von Stoffströmen. Eine Armatur kann einteilig oder mehrteilig ausgebildet sein und wird an einer Stelle in oder an der Rohrleitung installiert. Armaturen sind beispielsweise und nicht abschließend: Anschlussvorrichtungen, Anschlussarmaturen, Hauptabsperrarmaturen, Wartungsarmaturen, Drosselarmaturen, Entnahmestellen, Entnahmearmaturen, Entleerungsarmaturen, Sicherungsarmaturen, Sicherheitsarmaturen und Stellarmaturen. |
| Auslass | ist eine ablaufseitige Öffnung in einem Gehäuse, aus welcher ein Stoffstrom herausfließen kann. Die Öffnung kann insbesondere an eine Rohrleitung oder eine weitere Armatur angeschlossen sein oder frei zur Atmosphäre hin öffnen. |
| axial | ist die Richtung der Rotationsachse von ganz oder teilweise rotationssymmetrischen Bauteilen, wie etwas Rohren oder langgestreckten Gehäusen. Bei Bauteilen ohne Rotationssymmetrie ist es die Hauptströmungsrichtung in einem Bauteilabschnitt. |
| Druck | Kraft pro Fläche |
| Durchgang | ist eine Verbindung, welche Stoffströme ermöglicht. |
| Einlass | ist eine zulaufseitige Öffnung in einem Gehäuse, in welchen ein Stoffstrom hineinfließen kann. Die Öffnung kann insbesondere an eine Rohrleitung oder eine weitere Armatur angeschlossen sein oder frei zur Atmosphäre hin öffnen. |
| Filter | ist eine Einrichtung, mit welcher Feststoffe aus einem Fluidstrom zurückgehalten werden. |
| Gehäuse | Begrenzung für Stoffe, Bauteile, Instrumente und Messgeräte nach außen. Ein Gehäuse kann einteilig oder aus mehreren verbundenen Gehäuseteilen mehrteilig ausgebildet sein und aus einem oder mehreren Materialien bestehen. |
| radial | senkrecht zu einer axialen Richtung. |
| Rohr | Hohlkörper aus zylindrischen Abschnitten. Dient üblicherweise als Rohrleitung. |
| Rückspülen | Durchströmen einer Komponente oder von Filtermaterial in umgekehrter Richtung und Ablassen des Spülmediums nach außen Rückspülfilter Filter, welcher durch Rückspülen gereinigt wird. |
| Schulter | Übergang von Abschnitten unterschiedlicher Durchmesser oder Dicken. |
| Stutzen | Rand oder Übergangsstück an einer Öffnung. |

### Kurze Beschreibung der Zeichnungen

- Fig.1: ist eine perspektivische Darstellung eines Druckminderers mit einer integrierten Leckageschutzanordnung und einem Rückspülfilter.
- Fig.2: ist eine Seitenansicht der Anordnung aus Figur 1 ohne Abdeckung.
- Fig.3: ist ein Vertikalschnitt durch die Anordnung in Figur 1.
- Fig.4: zeigt den Druckminderer aus Figur 3 im Detail.
- Fig.5: zeigt die Abhängigkeit des Ausgangsdrucks hinter einem Druckminderer in Abhängigkeit vom Volumenstrom für einen geregelten und einen ungeregelten Druckminderer.

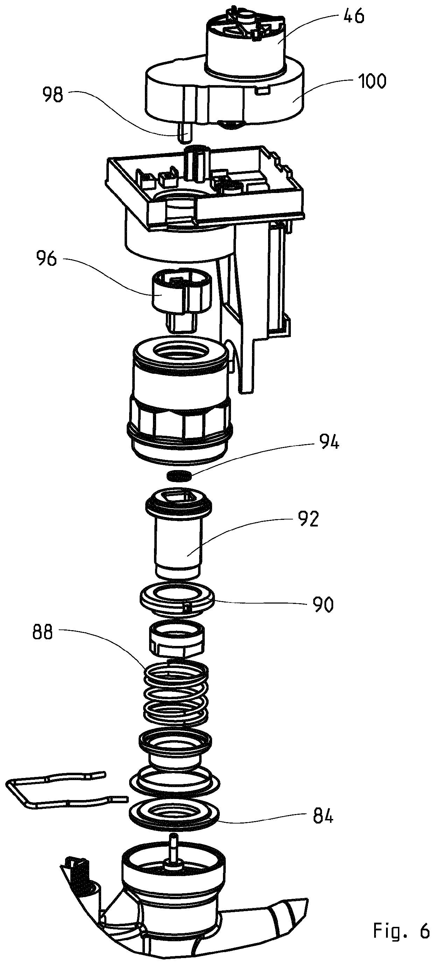

- Fig.6: ist eine Explosionsdarstellung des Druckminderers aus Figur 4.
- Fig.7: illustriert die Steuerung mit den zugehörigen Schnittstellen

### Beschreibung der Ausführungsbeispiele

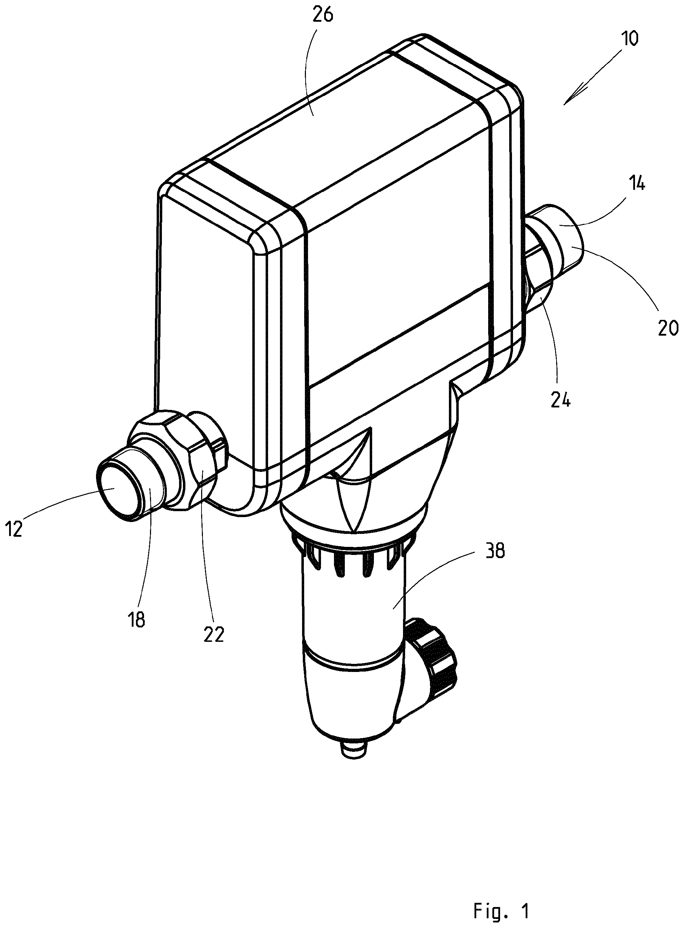

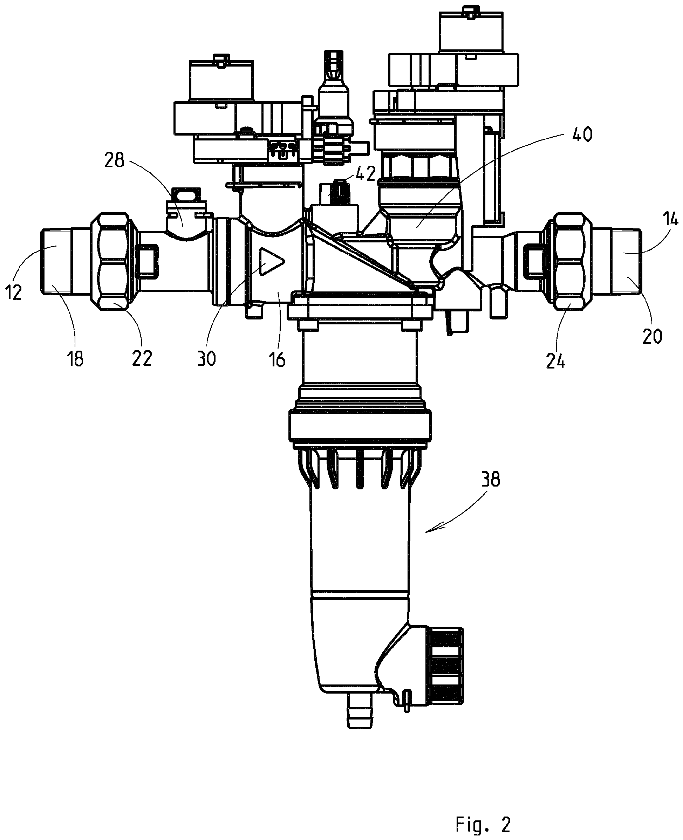

In Figur 1 und Figur 2 ist eine Wasserarmatur gezeigt, die allgemein mit 10 bezeichnet ist. Die Wasserarmatur ist für Trinkwasserinstallationen vorgesehen. Es ist aber auch möglich, die Wasserarmatur in anderen Fluidinstallationen, etwa für Heizungssysteme, industrielle Wasserinstallationen etc. zu verwenden. Die Wasserarmatur hat ein Armaturengehäuse 16 mit einem Einlass 12 und einem Auslass 14. Das Armaturengehäuse 16 besteht aus Messing. Es ist aber auch möglich andere Materialien zu verwenden, etwa Metalle, wie beispielsweise Rotguss oder Edelstahl oder die Armatur zumindest teilweise aus Kunststoff zu fertigen.

Die Wasserarmatur 10 wird mit dem Einlass 12 und dem koaxialen Auslass 14 in einer Rohrleitung (nicht dargestellt) zwischen einer Wasserversorgung und einer Wasserinstallation installiert. Hierfür sind im vorliegenden Ausführungsbeispiel rohrförmige Anschlusstücke 18, 20 mit einem Gewinde und jeweils eine Mutter 22, 24 vorgesehen. Es sind aber auch andere Verbindungsmöglichkeiten, beispielsweise Steckverbindungen möglich.

In der Wasserarmatur 10 sind verschiedene Bauteile für verschiedene Funktionalitäten vereint. Die Bauteile sind mit einer Abdeckung 26 abgedeckt. Die Wasserarmatur 10 ist in Figur 1 mit Abdeckung 26 gezeigt. Die Wasserarmatur 10 ist in Figur 2 ohne Abdeckung gezeigt.

Die erste stromaufwärtige Funktionalität in der Wasserarmatur 10 ist ein Leitfähigkeitssensor 28. Dieser ist nützlich, aber nicht zwingend für die nachstehend beschriebene Erfindung. Hinter dem Leitfähigkeitssensor ist eine mit einem Absperrmotor 34 betriebene Absperrung in Form eines Kugelhahns 30 vorgesehen. Es versteht sich, dass auch andere Absperrungen als ein Kugelhahn verwendet werden können. Die Absperrung 30 ist Teil einer Leckageschutzanordnung mit einer auf einer Platine angeordneten Steuerung 32. Die Steuerung 32 ist von den Signalen strömungsmessender Mittel in Form einer Turbine 36 beaufschlagt. Es versteht sich, dass auch andere strömungsmessende Mittel verwendet werden können.

Im Strömungsweg zwischen dem Kugelhahn 30 und der Turbine 36 ist ein Drucksensor 42 und ein Filter 38 angeordnet. Im vorliegenden Ausführungsbeispiel ist der Filter 38 ein Rückspülfilter. Es kann aber auch jeder andere Filter oder auch ein einfaches Sieb verwendet werden. Die Anordnung kann auch ohne Drucksensor an dieser Stelle und ohne Filter oder Sieb arbeiten. Dies ist beispielsweise der Fall, wenn ein separater Filter vor der Wasserarmatur installiert wird oder das Wasser nicht gefiltert werden muss. Stromabwärts zu der Turbine ist ein Druckminderer 40 vorgesehen. Die Einstellung des hinter dem Druckminderer 40 herrschenden Ruhedrucks und die Nachregelung des Fließdrucks wird nicht von Hand, sondern mit einem Druckminderer-Motor 46 vorgenommen. Der Druckminderer-Motor 46 wird von der Steuerung 32 gesteuert. Der hinter dem Druckminderer 40 herrschende Ausgangsdruck wird einem Drucksensor 44 erfasst. Die Signale des Drucksensors 44 werden an die Steuerung 32 übertragen und dort gemeinsam mit den Signalen der übrigen Sensoren, insbesondere der Turbine 36 ausgewertet. Je nach Signal kann dann die Absperrung betätigt werden und/oder der Druckminderer auf einen geeigneten Wert eingestellt werden.

Im vorliegenden Ausführungsbeispiel sind alle Funktionalitäten, insbesondere der Druckminderer 40 mit dem Drucksensor 44 für den Ausgangsdruck und die strömungsmessenden Mittel 36 in einem gemeinsamen Armaturengehäuse 16 vereint und mit einer gemeinsamen Steuerung 32 verbunden.

Der Leitfähigkeitssensor 28 ermittelt die Leitfähigkeit des Wassers. Die ermittelten Werte werden an die Steuerung 32 übertragen. Die Steuerung 32 ist drahtlos über WLAN oder mit einem Kabel an das Internet angeschlossen. Die Steuerung 32 ist über das Internet mit einem zentralen Server verbunden. Der zentrale Server ermöglicht den Zugang zu der Steuerung über herkömmliche Endgeräte, etwa Personal Computer, Mobilfunkendgerät und dergleichen. Eine Ein- und Ausgabeeinrichtung hat die Steuerung 32 im vorliegenden Ausführungsbeispiel daher nicht. Bei alternativen, aufwändigeren Ausführungsbeispielen sind Eingabe- und Ausgabeeinrichtungen in Form von Displays, Touchscreens, Tastaturen und dergleichen vorgesehen. Es ist auch möglich, ein direkt mit der Steuerung verbundenes Handgerät zu verwenden, das drahtlos, z.B. über eine Infrarot- oder Bluetooth Verbindung mit der Steuerung verbunden ist. Diese können nach Art einer Fernbedienung arbeiten. Es kann auch ein Smartphone verwendet werden.

Die Steuerung 32 verfügt im vorliegenden Ausführungsbeispiel neben den erforderlichen Schnittstellen auch über einen Speicher und einen Prozessor zum Speichern und Auswerten der Signale und Daten. Bei einem alternativen Ausführungsbeispiel erfolgt die Auswertung remote, d.h. mit einer geeigneten Software entweder auf einem zentralen Server oder bei einem Client. Dann werden die Signale praktisch ohne Verarbeitung in Form von Rohdaten direkt übertragen. Die Steuerung 32 und alle Antriebe 34, 46 werden über eine Batterie mit Energie versorgt. Alternativ kann ein Stromanschluss oder ein wiederaufladbarer Akkumulator verwendet werden.

Die Leitfähigkeitswerte des Leitfähigkeitssensors 28 werden ausgewertet. Wenn die Leitfähigkeit einen Grenzwert überschreitet, ist dies ein Indiz für übermäßig kalkhaltiges Wasser. Die Verbindung mit einer ohnehin vorhandenen Steuerung 32 ermöglicht es, den Nutzer zu informieren, dass die Verwendung eines Ionentauschers sinnvoll sein könnte. Die Mitteilung des Leitfähigkeitswertes kann, wie auch die nachstehend näher erläuterten Mitteilungen des Leckageschutzsystems auch, beispielsweise über Email, Push Nachricht oder Meldung beim Aufrufen der Software erfolgen.

Im vorliegenden Ausführungsbeispiel ist die Absperrung 30 als Kugelhahn ausgestaltet. Die Kugel sitzt in einer linearen Durchgangsbohrung des Armaturengehäuses 16. Die Kugel 48 des Kugelhahns ist drehfest mit einem Bolzen 50 verbunden. Der Motor 34 treibt den Bolzen 50 über ein Getriebe 52 an. Der Motor 34 wird von der Steuerung 32 gesteuert. Wenn beispielsweise - wie in der WO 2014/029699 A1 ausführlich beschrieben - Leckage angenommen wird, wird die Kugel mit dem Motor 34 um eine vertikale Achse gedreht und die Absperrung 30 geschlossen. Statt eines Kugelhahns kann auch beispielsweise ein motorbetriebenes Ventil oder eine andere Absperrung geschlossen werden. Ein in das Getriebe 52 eingreifender Schlüssel 54 ermöglicht es die Kugel zu drehen und bei Stromausfall die Absperrung 30 nach Entfernen der Abdeckhaube 26 manuell zu öffnen.

Der Drucksensor 42 misst den Eingangsdruck hinter der Absperrung über eine Gehäusebohrung 56. Die Eingangsdrucksignale des Drucksensors 42 werden an die Steuerung 32 übertragen. Dort werden sie gespeichert, ausgewertet und sind wie alle übrigen Signale und Daten über Ein- und Ausgabegeräte zugänglich.

Das Gehäuse 16 weist hinter der Absperrung 30 eine nach unten ragende Öffnung auf. Die Öffnung mündet in einem im Wesentlichen rohrförmigen Gehäuseteil 58, welches abdichtend an dem Gehäuse 16 befestigt ist. Das Gehäuseteil 58 kann auch von einem integrierten Gehäusestutzen gebildet sein. Am unteren Ende des Gehäuseteils 58 ist die Filtertasse 60 des Rückspülfilters 38 eingeschraubt. Bei dem Rückspülfilter 38 handelt es sich um einen herkömmlichen Rückspülfilter, der hier nicht näher beschrieben werden muss. Das Wasser fließt im äußeren Bereich der Filtertasse 60 nach unten, durch einen Filter radial nach innen und im inneren Bereich wieder nach oben. Zum Rückspülen wird ein Kugelhahn 62 am unteren Ende der Filtertasse 60 geöffnet. Im vorliegenden Ausführungsbeispiel wird der Kugelhahn 62 manuell geöffnet. Es ist aber auch möglich, den Kugelhahn 62 mit einem Motor zu betätigen. Der Motor kann dann ebenfalls von der Steuerung 32 gesteuert werden.

Stromabwärts des Filters und koaxial zum Gehäuseteil 58 ist die Turbine 36 und ein vorgeschalteter Rückflussverhinderer 64 im Strömungsweg angeordnet. Bei kleinen Volumenströmen wird der Anlaufwiderstand der Turbine 36 nicht überwunden. Der Rückflussverhinderer 64 bildet einen Strömungswiderstand, welcher verhindert, dass diese kleinen Volumenströme undetektiert durch die Turbine fließen. Die Turbine 36 ist mit einem Magneten versehen. Der Magnet wirkt mit einem gehäusefesten Reedkontakt zusammen. Jedes Mal, wenn der Magnet an der sich drehenden Turbine den Reedkontakt passiert, wird ein Impulssignal ausgelöst. Auf diese Weise kann der Volumenstrom durch die Turbine und somit durch die Wasserarmatur 10 gut erfasst werden. Es können aber auch andere strömungsmessende Mittel oder Detektoren verwendet werden. Das Signal der strömungsmessenden Mittel wird an die Steuerung 32 übertragen. Diese ermittelt den Volumenstrom durch die Wasserarmatur.

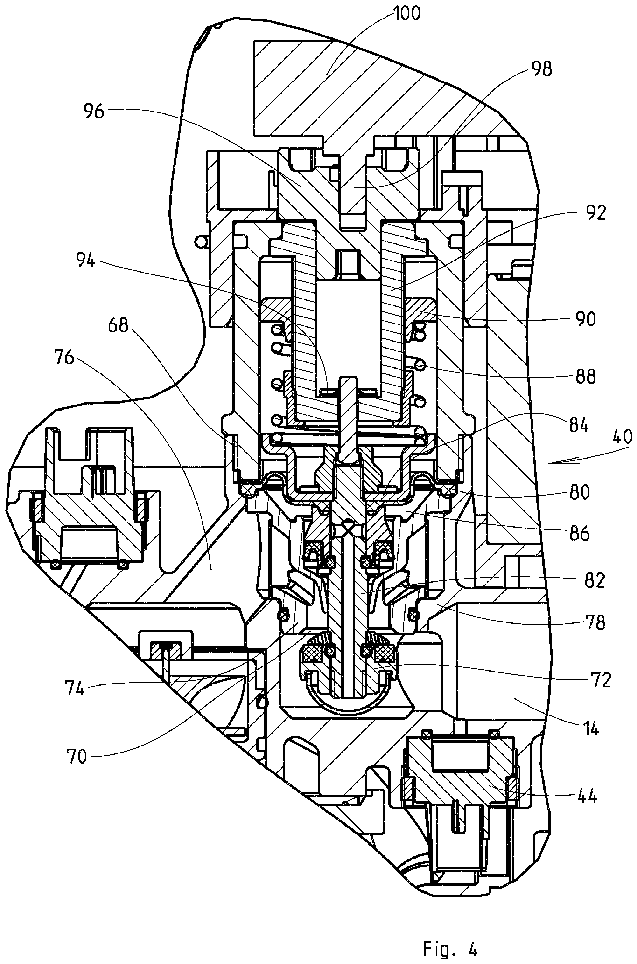

Das Armaturengehäuse 16 ist im Wesentlichen rohrförmig mit einer langgestreckten Gehäusebohrung 66 zwischen Einlass 12 und Auslass 14. Dadurch wird der Strömungswiderstand gering gehalten. Das zurück in das Armaturengehäuse 16 gelangte, gefilterte Wasser fließt über eine Gehäusebohrung 76 zum Druckminderer 40. Der Druckminderer 40 ist stromabwärts zu der Turbine 36 angeordnet. Der Druckminderer 40 ist in Figur 4 im Detail dargestellt.

Auslassseitig zu der nach unten ragenden Öffnung mit dem Gehäuseteil 58 bildet das Gehäuse einen Stutzen 68. In den Stutzen 68 ist ein Druckminderer-Einsatz eingesteckt. Ein Ventilschließkörper 72 bildet mit einem Ventilsitz 74 das Druckmindererventil 70. Das Druckmindererventil 70 kontrolliert die Strömung durch die Wasserarmatur 10 und den Ausgangsdruck.

Das Armaturengehäuse 16 bildet eine Trennwandung 78 mit einer Öffnung, die sich im vorliegenden Ausführungsbeispiel in horizontaler Richtung erstreckt. In die Öffnung ist der Ventilsitz 74 des Druckminderereinsatzes mit einer Dichtung eingesteckt. Der Druckminderereinsatz weist in üblicher Weise eine Membran 80, eine Spindel 82 und einen mit der Spindel verbundenen Membranteller 84 auf. Der in einer Steuerkammer 86 herrschende Druck wird in bekannter Weise vom Ausgangsdruck und einer Feder 88 beeinflusst, mit deren Kraft der Membranteller 84 beaufschlagt ist. Wenn der Ausgangsdruck abfällt, wird der Ventilschließkörper 72 nach unten bewegt. Dann öffnet das Druckmindererventil 70 und Wasser strömt zum Auslass, bis der Ausgangsdruck wieder den eingestellten Sollwert annimmt.

Die Einstellung des Ausgangsdrucks erfolgt über die Federkraft der Feder 88. Ein axialbeweglicher Federteller 90 bildet das Federwiderlager der Feder 88. Wenn der Federteller 90 sich in einer oberen Stellung in Figur 4 befindet, ist die Federkraft geringer, als wenn der Federteller 90 sich in einer unteren Stellung befindet. Entsprechend ist der eingestellte Ausgangsdruck bei der oberen Stellung ein niedriger Ausgangsdruck als bei der unteren Stellung des Federtellers 90.

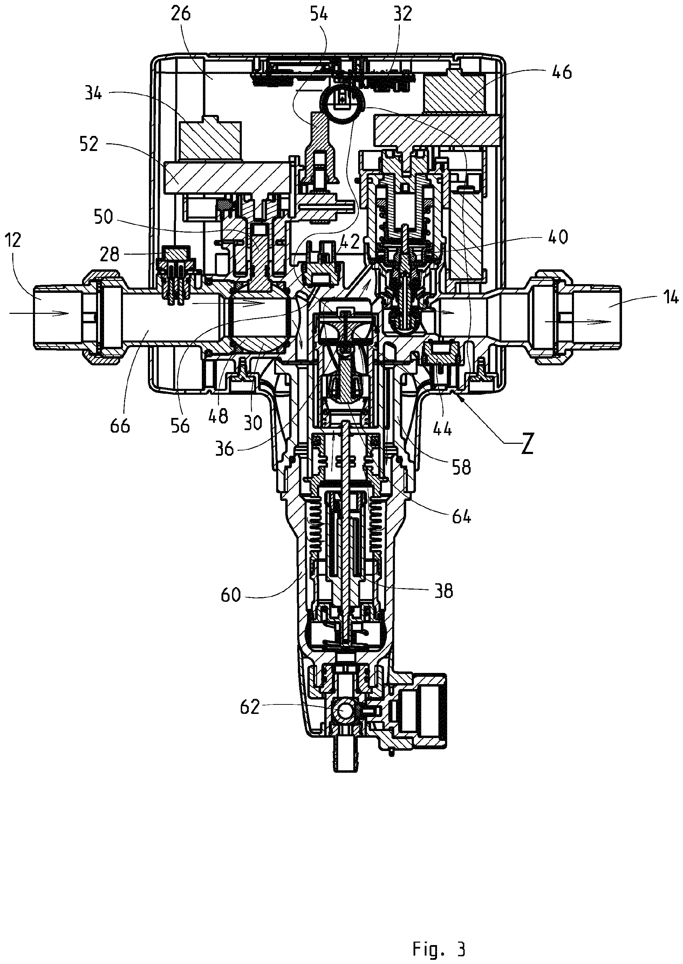

Die Einstellung des Ausgangsdrucks erfolgt mittels des Motors 46. Der Federteller 90 bildet also ein motorbetätigtes Stellglied. Der Federteller 90 ist ringförmig und mit einem Innengewinde auf ein topfförmiges, gehäusefestes Gewindeelement 92 aufgeschraubt. Insbesondere ist das Gewindeelement 92 mit einem Fixierring 94 in axialer Richtung fixiert. Der Federteller 90 ist unverdrehbar, aber axialbeweglich gehalten. Wenn das Gewindeelement 92 gedreht wird, führt dies zu einer Axialbewegung des Federtellers 90. Die Axialbewegung des Federtellers 90 führt zu einer Änderung des Sollwerts für den Druck. Das Gewindeelement 92 ist fest mit einer Kupplung 96 verbunden. In die Kupplung 96 greift ein Getriebe 100 mit einem Zapfen 98. Der Motor 46 (Fig.3) treibt über das Getriebe 100, den Zapfen 98 und die Kupplung 96 das Gewindeelement 92 an. Eine Einstellung des Ausgangsdrucks erfolgt also durch motorgetriebene Bewegung des Federtellers 90. Der Motor ist im vorliegenden Ausführungsbeispiel als Schrittmotor ausgebildet.

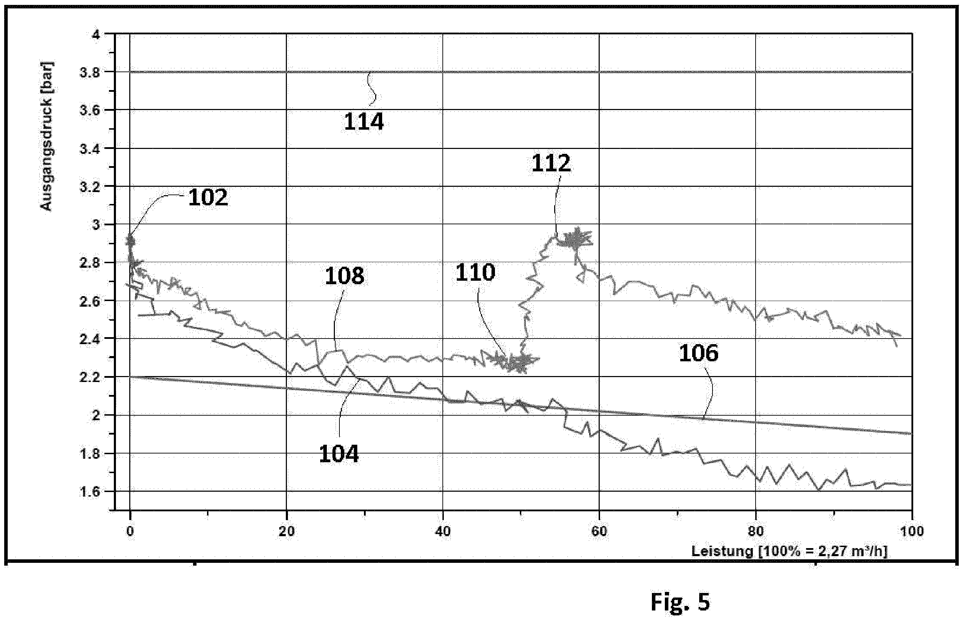

Eine typische Einstellung des Druckminderers für Trinkwasserinstallationen ist 3 bar. Dies ist ein in Normen häufig vorgeschriebener Wert. Es versteht sich, dass bei anderen Wasserinstallationen auch ein anderer Wert sinnvoll sein kann, beispielsweise 4 bar. Dies ist der Ruhedruck. Der Druck wird mit dem Drucksensor 44 im Auslass 14 hinter dem Druckminderer 40 gemessen. Die Messsignale werden an die Steuerung 32 übertragen. Figur 5 zeigt ein Beispiel einer realen Messung. Am Punkt 102 ist die Leistung. Dies entspricht der Situation, bei der kein Volumenstrom zu detektieren ist. Der gemessene Ausgangsdruck ist 3 bar.

Wenn Wasser in der Wasserinstallation gezapft wird, fällt der Ausgangsdruck ab. Dann öffnet das Druckmindererventil. Es fließt Wasser und es wird ein Volumenstrom erfasst. Dies ist an der Kurve 104 in Figur 5 zu erkennen. Der Druckminderer 40 selber erzeugt einen zusätzlichen Druckabfall in der Größenordnung von beispielsweise 0,6 bis 0,8 bar. Es versteht sich, dass dieser Wert von der Art und Ausbildung des Druckminderers abhängt und kein Festwert ist. Mit steigender Leistung, d.h. mit steigendem Volumenstrom, wird ein geringerer Ausgangsdruck gemessen. Der in der Wasserinstallation und im Auslass 14 herrschende Druck ist bei einer Leistung von 50% in Figur 5 also lediglich beispielsweise 2,3 bar. Dieser niedrigere Druck wird mit dem Drucksensor 44 gemessen und an die Steuerung 32 übertragen. Die Steuerung 32 vergleicht den gemessenen Ausgangsdruck mit einem gespeicherten Sollwert. Wenn der Ausgangsdruck, wie am Beispiel der Messkurve 104 dargestellt, bei steigendem Volumenstrom - entsprechend steigender Leistung - weiter abfällt, erreicht er nicht mehr den Grenzwert, der durch die Norm festgelegt ist. Dies ist bei etwa 55% der Leistung der Fall. Der untere Grenzwert ist durch die Kurve 106 in Figur 5 repräsentiert.

Die Erfindung sieht daher vor, dass der eingestellte Sollwert des Drucks nachgeregelt wird. Ein einzelner Regelvorgang ist beispielhaft anhand von der Kurve 108 illustriert: bei ca. 50% Leistung wird ein Wert von ca. 2,3 bar erfasst. Dies ist bei 110 zu erkennen. Damit liegt der am Drucksensor 44 gemessene Messwert unterhalb eines Schwellwertes. Der Motor erhält von der Steuerung 32 einen Befehl, das Gewindeelement zu drehen, so dass sich der Federteller nach unten bewegt. Dadurch wird die Federkraft der Feder 88 vergrößert und das Ventil weiter geöffnet. Der während des Zapfvorgangs herrschende Fließdruck wird auf knapp 3 bar erhöht. Dies ist am Punkt 112 zu erkennen. Auch danach fällt der Druck weiter in Abhängigkeit vom Volumenstrom ab. Der gemessene Ausgangsdruck bleibt jedoch jederzeit gut über dem vorgeschriebenen Minimaldruck 106.

In Gebäuden mit mehreren Stockwerken tritt ein höhenabhängiger Druckabfall auf. Der in den oberen Stockwerken herrschende Druck kann errechnet oder mit einem weiteren Drucksensor (nicht dargestellt) erfasst werden. Dieser Druck kann an die Steuerung 32 übertragen werden. Wenn der Druck unterhalb eines Schwellwertes liegt, kann der Druckminderer in einer Weise geregelt werden, dass auch dieser Druck oberhalb beispielsweise des vorgeschriebenen Minimaldrucks 106 liegt. Mit dem Drucksensor 44 wird sichergestellt, dass der Druck an keiner Stelle den oberen Grenzwert - im vorliegenden Ausführungsbeispiel 3,8 bar - erreicht, der durch die Kurve 114 repräsentiert ist.

Das vorliegende Ausführungsbeispiel illustriert einen einzelnen Regelvorgang. In der Praxis können die Schwellwerte so eingestellt werden, dass mehrfach nachgeregelt wird und ein gleichförmige Druckverlauf erreicht wird. Dann ist der Ausgangsdruck unabhängig vom Volumenstrom praktisch immer der gleiche.

Wenn kein Wasser mehr gezapft wird, wird das Druckmindererventil wieder zurück in seine Ausgangslage bei eingestelltem Ruhedruck gebracht. Das Stellglied, d.h. der Federteller 90, muss zurück nach oben bewegt werden. Dies erfordert bei großen Amplituden, d.h. bei langen Stellwegen des Stellglieds, möglicherweise mehr Zeit als für den Druckaufbau in der Wasserinstallation. Dann unterliegt die Wasserinstallation in der Zwischenzeit einem unzulässig hohem Druck. Wenn die Turbine nur kurzzeitige Volumenströme erfasst, ist es daher möglicherweise sinnvoll nicht vollständig nachzuregeln und den Druckminderer nicht ganz so weit zu öffnen. Dann sind die Stellwege beim zurückbewegen geringer und die Gefahr von Druckstößen wird vermieden. Das Gleiche ist der Fall, wenn die Volumenströme mit der Zeit abnehmen.

Der erfindungsgemäße, motorgesteuerte Druckminderer 40 ist nicht nur mit einem Drucksensor 44 und strömungsmessenden Mitteln 36 versehen. Er weist auch eine Steuerung 32 auf, welche die gemessenen Signale auswertet und die Kontrolle der gesamten nachgeschalteten Wasserinstallation erlaubt. Die Verwendung einer vernetzten Steuerung erlaubt den Zugang über beispielsweise ein Smartphone 120 oder einen Personal Computer 122. Auf diese Weise ist nicht nur die Leckageschutzeinrichtung mit Absperrung 30, sondern auch der Druckminderer 40 fernsteuerbar und nachregelbar.

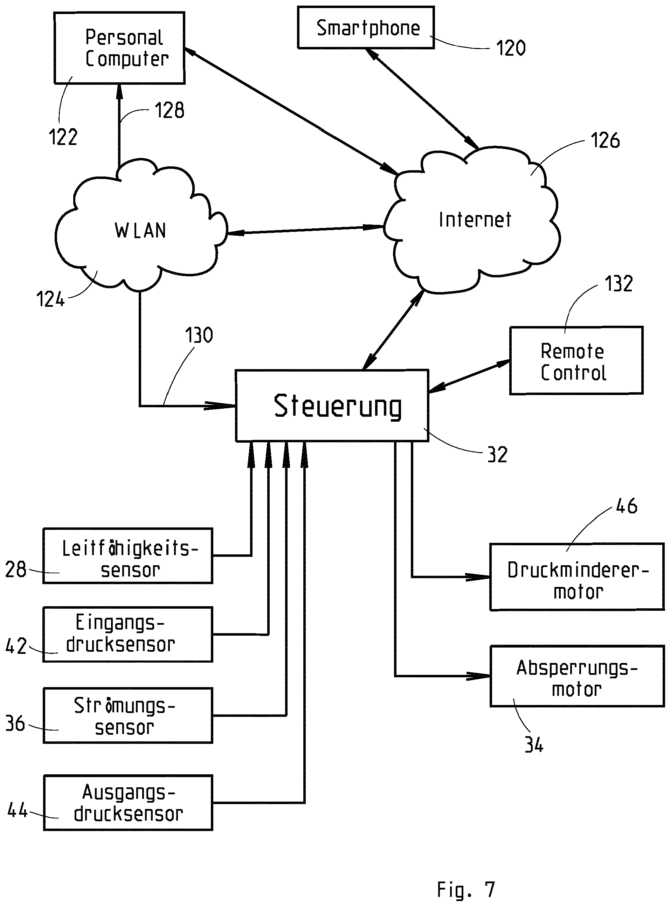

Im vorliegenden Ausführungsbeispiel hat die Steuerung 32 keine eigene Benutzerschnittstelle. Es ist keine eigene Anzeige vorgesehen und - außer einem Reset-Knopf - keine Eingabemöglichkeit. Die Steuerung 32 ist auf einer einfachen Platine angeordnet. Sie umfasst verschiedene Schnittstellen zu den Sensoren 28, 42, 36 und 44. Es versteht sich, dass auch weitere oder weniger Sensoren vorgesehen sein können. Dies ist schematisch in Figur 7 illustriert. Neben den Signalen der Sensoren steuert die Steuerung auch den Druckminderermotor 46 und den Absperrungsmotor 34 nach Maßgabe der von den Sensoren erhaltenen Signale.

Die Steuerung ist mit einem WLAN 124 verbunden. Dies kann über ein Netzwerkkabel oder drahtlos erfolgen. Über das WLAN kann die Steuerung mit dem Internet 126 oder einem anderen Netzwerk verbunden werden. Dies ermöglicht den Zugriff auch von weit entfernten Personen. Es versteht sich, dass übliche Zugangsbeschränkungen und Sicherheitseinrichtungen vorgesehen sind, die den unbefugten Zugriff verhindern.

Für den Zugriff sind verschiedene Nutzerschnittstellen geeignet. So kann beispielsweise ein Zugriff über einen Personal Computer mit einer geeigneten Software oder ohne eigene Software über ein Internetportal erfolgen. Es kann auch eine App auf einem Smartphone vorgesehen sein. Derartige Endgeräte haben geeignete Nutzerschnittstellen mit Display und Eingabevorrichtung, so dass die Eingabe von Daten und Einstellungen komfortabel möglich ist. Es ist aber auch möglich, den Zugriff alternativ oder zusätzlich über LAN oder WLAN ohne Internet zu ermöglichen. Dies ist durch Pfeile 128 und 130 repräsentiert. Wenn kein WLAN und kein Internet zur Verfügung stehen, kann der Zugriff auf die Steuerung auch über eine Fernbedienung 132 erfolgen.

Es versteht sich, dass die in Figur 7 gezeigte Anordnung nur schematisch ist und eine Vielzahl von anderen Konstruktionen und die Verwendung anderer Netzwerke ermöglicht. Wichtig für die Erfindung ist lediglich, dass der Druckminderer über eine Steuerung angesteuert wird, die weitere Aufgaben erfüllt und gleichzeitig mit den Signalen eines Drucksensors und strömungsmessender Mittel beaufschlagt ist.

Die oben erläuterten Ausführungsbeispiele dienen der Illustration der in den Ansprüchen beanspruchten Erfindung. Merkmale, welche gemeinsam mit anderen Merkmalen offenbart sind, können in der Regel auch alleine oder in Kombination mit anderen Merkmalen, die im Text oder in den Zeichnungen explizit oder implizit in den Ausführungsbeispielen offenbart sind, verwendet werden. Maße und Größen sind nur beispielhaft angegeben. Dem Fachmann ergeben sich geeignete Bereiche aus seinem Fachwissen und brauchen hier daher nicht näher erläutert werden. Die Offenbarung einer konkreten Ausgestaltung eines Merkmals bedeutet nicht, dass die Erfindung auf diese konkrete Ausgestaltung beschränkt werden soll. Vielmehr kann ein solches Merkmal durch eine Vielzahl anderer, dem Fachmann geläufigen Ausgestaltungen verwirklicht werden. Die Erfindung kann daher nicht nur in Form der erläuterten Ausgestaltungen verwirklicht werden, sondern durch alle Ausgestaltungen, welche vom Schutzbereich der beigefügten Ansprüche abgedeckt sind. So ist es beispielsweise möglich die Anschlussarmatur und deren Verbindung mit dem Gehäuse auf vielfältige Weise zu verändern ohne dass vom Erfindungsgedanken abgewichen wird.

Die Begriffe "oben", "unten", "rechts" und "links" beziehen sich ausschließlich auf die beigefügten Zeichnungen. Es versteht sich, dass beanspruchte Vorrichtungen auch eine andere Orientierung annehmen können. Der Begriff "enthaltend" und der Begriff "umfassend" bedeuten, dass weitere, nicht-genannte Komponenten vorgesehen sein können. Unter dem Begriff "im Wesentlichen", "vorwiegend" und "überwiegend" fallen alle Merkmale, die eine Eigenschaft oder einen Gehalt mehrheitlich, d.h. mehr als alle anderen genannten Komponenten oder Eigenschaften des Merkmals aufweisen, also bei zwei Komponenten beispielsweise mehr als 50%.

## Patentansprüche

1. Wasserarmaturen-Anordnung enthaltend
(a) ein wasserführendes Armaturengehäuse mit einem von Eingangsdruck beaufschlagten Einlass und mit einem von einem Ausgangsdruck beaufschlagten Auslass;
(b) einen zwischen Einlass und Auslass angeordneten Druckminderer mit einem Stellglied zum Einstellen des Ausgangsdrucks;
(c) einen Druckminderer-Motor zum Bewegen des Stellglieds;
(d) einen Drucksensor zur Erfassung des Ausgangsdrucks; und
(e) eine Steuereinrichtung zur Steuerung des Druckminderer-Motors nach Maßgabe des mit dem Drucksensor erfassten Ausgangsdrucks;
**dadurch gekennzeichnet, dass**
(f) die Wasserarmaturen-Anordnung strömungserfassende Mitteln umfasst; und
(g) die Steuereinrichtung mit den Signalen der strömungserfassenden Mittel beaufschlagt ist.

2. Wasserarmaturenanordnung nach Anspruch 1, **dadurch gekennzeichnet, dass** eine von einem Absperrmotor betriebenen Absperrung enthalten ist, die zusammen mit den strömungserfassenden Mitteln und der Steuerung eine Leckagesschutzeinrichtung bilden und die Steuerung sowohl den Druckminderer-Motor als auch den Absperrmotor steuert.

3. Wasserarmaturen-Anordnung nach Anspruch 1 oder 2, **dadurch gekennzeichnet, dass** die strömungserfassenden Mittel eine Turbine umfassen.

4. Wasserarmaturen-Anordnung nach Anspruch 3, **dadurch gekennzeichnet, dass** ein Filter stromaufwärts zu der Turbine angeordnet ist.

5. Wasserarmaturen-Anordnung nach Anspruch 4, **dadurch gekennzeichnet, dass** der Filter ein Rückspülfilter ist.

6. Wasserarmaturen-Anordnung nach Anspruch 4 oder 5, **dadurch gekennzeichnet, dass** die Turbine und der stromaufwärts zur Turbine angeordnete Filter in der Strömung zwischen der Absperrung und dem Druckminderer angeordnet sind.

7. Wasserarmaturen-Anordnung nach einem der vorgehenden Ansprüche 2 bis 6, **gekennzeichnet durch** einen zusätzlichen Drucksensor zwischen Absperrung und Druckminderer, dessen Messwerte an die Steuerung übertragen werden.

8. Wasserarmaturen-Anordnung nach einem der vorgehenden Ansprüche, **dadurch gekennzeichnet, dass** die Steuerung eine oder mehrere Schnittstellen aufweist, über welche Leckageschutz und/oder Druckverhältnisse vorgenommen werden können.

9. Wasserarmaturen-Anordnung nach Anspruch 8, **dadurch gekennzeichnet, dass** die Schnittstelle eine Drahtlos-Schnittstelle umfasst und die Einstellungen über einen Teilnehmer in einem Netzwerk vorgenommen werden können, das drahtlos mit der Steuerung verbunden ist.

10. Wasserarmaturen-Anordnung nach einem der vorgehenden Ansprüche, **dadurch gekennzeichnet, dass** die Steuerung, die Absperrung, der Absperrmotor, der Druckminderer und der Druckminderermotor, sowie die zugehörigen Teile des wasserführenden Armaturengehäuses mit einer gemeinsamen Abdeckung abgedeckt sind.

11. Verfahren zur Regelung des Ausgangs-Fließdrucks mit einem Druckminderer in einer Wasserarmatur stromaufwärts einer Wasserinstallation mit den Schritten:
(a) Einstellen des Druckminderers auf einen Sollwert für den Ruhedruck;
(b) Messen des Ausgangs-Fließdrucks mit einem Drucksensor;
(c) Messen des Volumenstroms durch die Wasserarmatur mit strömungserfassenden Mitteln;
(d) Übertragen der Messwerte für den Druck und den Volumenstrom an eine Steuerung;
(e) Nachregeln der Einstellung des Druckminderers nach Maßgabe der von dem Drucksensor und den strömungserfassenden Mitteln gemessenen Messwerte;
(f) Zurückstellen der Einstellung des Druckminderers, wenn kein Volumenstrom mehr mit den strömungserfassenden Mitteln gemessen wird.

12. Verfahren nach Anspruch 11, **dadurch gekennzeichnet, dass**
(a) das Nachregeln mittels eines Druckminderer-Motors erfolgt, welcher ein Stellglied des Druckminderers bewegt;
(b) die Motorstellung vor einem Nachregel-Vorgang gespeichert wird; und
(c) zum Zurückstellen der Motor zurück in die gespeicherte Ausgangsstellung bewegt wird.

13. Verfahren nach Anspruch 12, **dadurch gekennzeichnet, dass** der Motor ein Schrittmotor ist.

14. Verfahren nach einem der Ansprüche 11 bis 13, **dadurch gekennzeichnet, dass** die Amplitude der Nachregelung in Abhängigkeit vom gemessenen Volumenstrom gewählt wird.

15. Verfahren nach Anspruch 14, **dadurch gekennzeichnet, dass** der Druckminderer bei geringem Volumenstrom weniger geöffnet wird, als bei hohem Volumenstrom.

16. Verfahren nach einem der Ansprüche 11 bis 15, **dadurch gekennzeichnet, dass**
(a) der Druck an wenigstens einer weiteren Stelle einer Wasserinstallation gemessen wird und über ein Netzwerk an eine gemeinsame Steuerung kommuniziert wird; und
(b) der Druck an der wenigstens einen weiteren Stelle beim Nachregeln des Druckminderers berücksichtigt wird.

## Claims

1. Water fitting assembly comprising
(a) a water-containing fitting housing with an inlet having inlet pressure and an outlet having outlet pressure;
(b) a pressure reducer positioned between the inlet and the outlet, the pressure reducer having an actuator for adjusting the outlet pressure;
(c) a pressure reducer motor for moving the actuator;
(d) a pressure sensor for sensing the outlet pressure;
(e) a control device for controlling the pressure reducer motor in response to the outlet pressure sensed by the pressure sensor;
**characterized in that**
(f) the water fitting assembly comprises flow measuring means; and
(g) the control device receives signals from the flow measuring means.

2. Water fitting assembly according to claim 1, **characterized in that** a shut-off valve operated by a shut-off motor is included which together with the flow measuring means and the control device forms a leakage protection device and the control device controls both the pressure reducer motor and the shut-off motor.

3. Water fitting assembly according to claim 1 or 2, **characterized in that** the flow measuring means comprise a turbine.

4. Water fitting assembly according to claim 3, **characterized in that** a filter is provided upstream of the turbine.

5. Water fitting assembly according to claim 4, **characterized in that** the filter is a backflushing filter.

6. Water fitting assembly according to claim 4 or 5, **characterized in that** the turbine and turbine provided upstream to the filter are positioned between the shut-off valve and the pressure reducer.

7. Water fitting assembly according to any of the preceding claims 2 to 6, **characterized by** an additional pressure sensor between the shut-off valve and the pressure reducer, the measured values of which are transmitted to the control device.

8. Water fitting assembly according to any of the preceding claims, **characterized in that** the control device is provided with one or more interfaces for setting the leakage protection and/or pressure conditions.

9. Water fitting assembly according to claim 8, **characterized in that** the interface comprises a wireless interface and the settings can be made by a member in a network which is wireless connected to the control device.

10. Water fitting assembly according to any of the preceding claims, **characterized in that** the control, the shut-off valve, the shut-off motor, the pressure reducer and the pressure reducer motor and the corresponding parts of the water containing fitting housing are covered by a common cover.

11. Method for controlling the outlet flow pressure with a pressure reducer in a water fitting upstream of a water installation comprising the steps of
(a) Adjusting the pressure reducer to a set value for the static pressure;
(b) measuring the outlet flow pressure with a pressure sensor;
(c) measuring the flow volume through the water fitting with flow measuring means;
(d) transmitting the measured values for the pressure and the flow volume to a control device;
(e) readjusting the settings of the pressure reducer in response to the measured values measured by the pressure sensor and the flow measuring means;
(f) returning to the setting of the pressure reducer if no flow volume is detected anymore by the flow measuring means.

12. Method according to claim 11, **characterized in that**
(a) the adjustment is effected by means of a pressure reducer motor which moves an actuator of the pressure reducer;
(b) the position of the motor is saved before re-adjustment; and
(c) the motor is moved to the saved initial position when returning.

13. Method according to claim 12, **characterized in that** the motor is a step motor.

14. Method according to any of claims 11 to 13, **characterized in that** the amplitude of the re-adjustment is selected in response to the measured volume flow.

15. Method according to claim 14, **characterized in that** the pressure reducer is opened less when there is a small volume flow than when there is a large volume flow.

16. Method according to any of claims 11 to 15, **characterized in that**
(a) the pressure is measured at least at one additional point of the water installation and communicated to the common control device through a network; and
(b) the pressure at such at least one additional point is taken into account when readjusting the pressure reducer.

## Revendications

1. Disposition de pièce de robinetterie d'eau, comprenant
(a) un boîtier de pièce de robinetterie d'eau qui guide l'eau et qui est muni d'une entrée à laquelle est appliquée une pression d'entrée et muni d'une sortie à laquelle est appliquée une pression de sortie ;
(b) un réducteur de pression disposé entre l'entrée et la sortie et muni d'un organe de réglage destiné à régler la pression de sortie ;
(c) un moteur de réducteur de pression destiné à déplacer l'organe de réglage ;
(d) un capteur de pression destiné à saisir la pression de sortie ; et
(e) un dispositif de commande destiné à commander le moteur de réducteur de pression en fonction de la pression de sortie saisie à l'aide du capteur de pression ;
**caractérisée en ce que**
(f) la disposition de pièce de robinetterie d'eau comprend des moyens de saisie du courant ; et
(g) les signaux des moyens de saisie du courant sont appliqués au dispositif de commande.

2. Disposition de pièce de robinetterie d'eau selon la revendication 1, **caractérisée en ce qu'**elle comprend un dispositif d'arrêt actionné par un moteur d'arrêt et qui forme avec les moyens de saisie du courant et le dispositif de commande un dispositif de protection contre les fuites et qui commande aussi bien le moteur du réducteur de pression que le moteur d'arrêt.

3. Disposition de pièce de robinetterie d'eau selon la revendication 1 ou 2, **caractérisée en ce que** les moyens de saisie du courant comprennent une turbine.

4. Disposition de pièce de robinetterie d'eau selon la revendication 3, **caractérisée en ce qu'**un filtre est disposé en amont du courant par rapport à la turbine.

5. Disposition de pièce de robinetterie d'eau selon la revendication 4, **caractérisée en ce que** le filtre est un filtre à lavage à contre-courant.

6. Disposition de pièce de robinetterie d'eau selon la revendication 4 ou 5, **caractérisée en ce que** la turbine et le filtre disposé en amont du courant par rapport à la turbine sont disposés dans le courant entre le dispositif d'arrêt et le réducteur de pression.

7. Disposition de pièce de robinetterie d'eau selon l'une quelconque des revendications précédentes 2 à 6, **caractérisée par** un capteur de pression supplémentaire situé entre le dispositif d'arrêt et le réducteur de pression et dont les valeurs de mesure sont transmises au dispositif de commande.

8. Disposition de pièce de robinetterie d'eau selon l'une quelconque des revendications précédentes, **caractérisée en ce que** le dispositif de commande présente une ou plusieurs interfaces permettant d'appliquer des mesures de protection contre les fuites et/ou des conditions de pression.

9. Disposition de pièce de robinetterie d'eau selon la revendication 8, **caractérisée en ce que** l'interface comprend une interface sans fil et les réglages peuvent être effectués par l'intermédiaire d'une personne connectée à un réseau connecté sans fil au dispositif de commande.

10. Disposition de pièce de robinetterie d'eau selon l'une quelconque des revendications précédentes, **caractérisée en ce que** le dispositif de commande, le dispositif d'arrêt, le moteur d'arrêt, le réducteur de pression et le moteur du réducteur de pression ainsi que les pièces faisant partie du boîtier de pièce de robinetterie d'eau qui guide l'eau sont recouverts d'un couvercle commun.

11. Procédé destiné au réglage de la pression d'écoulement de sortie à l'aide d'un réducteur de pression dans une pièce de robinetterie d'eau située en amont du courant d'une installation d'eau présentant les étapes de :
(a) réglage du réducteur de pression à une valeur de consigne de la pression de repos ;
(b) mesure de la pression d'écoulement de sortie à l'aide d'un capteur de pression ;
(c) mesure du débit régnant dans la pièce de robinetterie d'eau à l'aide de moyens de saisie du courant ;
(d) transmission des valeurs de mesure de la pression et du débit à un dispositif de commande ;
(e) réajustement du réglage du réducteur de pression en fonction des valeurs de mesure mesurées par le capteur de pression et les moyens de saisie du courant ;
(f) remise du réglage du réducteur de pression à sa valeur initiale lorsque les moyens de saisie du courant ne mesurent plus de débit.

12. Procédé selon la revendication 11, **caractérisé en ce que**
(a) le réajustement est effectué à l'aide d'un moteur de réducteur de pression qui déplace un organe de réglage du réducteur de pression ;
(b) la position du moteur est sauvegardée avant une procédure de réajustement ; et
(c) pour sa remise en position initiale, le moteur est ramené dans la position initiale sauvegardée.

13. Procédé selon la revendication 12, **caractérisé en ce que** le moteur est un moteur pas à pas.

14. Procédé selon l'une quelconque des revendications 11 à 13, **caractérisé en ce que** l'amplitude du réajustement est choisie en fonction du débit mesuré.

15. Procédé selon la revendication 14, **caractérisé en ce que** le réducteur de pression s'ouvre moins en cas de débit bas qu'en cas de débit élevé.

16. Procédé selon l'une des revendications 11 à 15, **caractérisé en ce que**
(a) la pression est mesurée à au moins un autre point d'une installation d'eau et est communiquée à un dispositif de commande commun par l'intermédiaire d'un réseau ; et
(b) la pression est prise en compte au moins au point supplémentaire lors du réajustement du réducteur de pression.
